(19) **Europäisches Patentamt / European Patent Office / Office européen des brevets**

(11) **EP 2 097 583 B1**

(12) **FASCICULE DE BREVET EUROPEEN**

(45) Date de publication et mention de la délivrance du brevet:
**14.03.2018 Bulletin 2018/11**

(21) Numéro de dépôt: **07870382.4**

(22) Date de dépôt: **03.12.2007**

(51) Int Cl.:
*C08B 30/12* *(2006.01)*    *C08B 30/18* *(2006.01)*
*C08B 31/00* *(2006.01)*    *C08L 3/00* *(2006.01)*
*D21H 17/28* *(2006.01)*    *D21H 19/54* *(2006.01)*

(86) Numéro de dépôt international:
**PCT/FR2007/052434**

(87) Numéro de publication internationale:
**WO 2008/074957 (26.06.2008 Gazette 2008/26)**

(54) **UTILISATION D'UN DERIVE D'AMIDON DE LEGUMINEUSES POUR LE COUCHAGE DU PAPIER OU DU CARTON PLAT ET COMPOSITION DE COUCHAGE LE CONTENANT**

VERWENDUNG VON STÄRKEDERIVATEN AUS HÜLSENFRÜCHTEN ZUR SCHICHTUNG VON PAPIER ODER DÜNNEM KARTON UND SCHICHTUNGSZUSAMMENSETZUNG DAMIT

USE OF LEGUMINOUS STARCH DERIVATIVE FOR LAYING PAPER OR FLAT CARTON AND LAYING COMPOSITION CONTAINING THE SAME

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **04.12.2006 FR 0610560**

(43) Date de publication de la demande:
**09.09.2009 Bulletin 2009/37**

(73) Titulaire: **Roquette Frères**
**62136 Lestrem (FR)**

(72) Inventeurs:
• **LADRET, Marika**
**59840 Lompret (FR)**
• **ONIC, Ludivine**
**62660 Beuvry (FR)**

(74) Mandataire: **Cabinet Plasseraud**
**66, rue de la Chaussée d'Antin**
**75440 Paris Cedex 09 (FR)**

(56) Documents cités:
**EP-A- 1 369 432      EP-A- 1 548 033**
**EP-A1- 0 902 037      WO-A-97/42225**

**WO-A-2004/064540    WO-A-2005/003456**
**FR-A- 2 852 977      FR-A- 2 854 898**
**FR-A1- 2 855 524     US-B2- 6 512 108**

• **RATNAYAKE W S ET AL: "Pea starch: Composition, Structure and Properties - A Review"** 1 janvier 2002 (2002-01-01), STARKE - STARCH, WILEY-VCH VERLAG, WEINHEIM, DE, PAGE(S) 217 - 234 , XP002269066 ISSN: 0038-9056 page 220, colonne de droite, alinéa 2 - page 230, colonne de gauche, alinéa 1
• **KLINGLER R ET AL: "SAEUREABBAU VON STAERKE UNTER SEMI-DRY BEDINGUNGEN ACID MODIFICATION OF STARCH IN A SEMI-DRY PROCESS"** 1 janvier 1997 (1997-01-01), STARKE - STARCH, WILEY-VCH VERLAG, WEINHEIM, DE, PAGE(S) 391 - 395 , XP001000513 ISSN: 0038-9056 abrégé page 391, colonne de gauche, dernier alinéa - page 395, colonne de droite, alinéa 2
• **SLOMINSKA L ET AL: "LOW CONVERSION STARCH HYDROLYSATES"** 1 janvier 2002 (2002-01-01), ZYWNOSC, TECHNOLOGIA, JAKOSC, AKAPIT, KRAKOW, PO, PAGE(S) 31 - 39 , XP008030317 ISSN: 1425-6059 abrégé page 32, alinéa 3 - page 38, dernier alinéa

Remarques:
Le dossier contient des informations techniques présentées postérieurement au dépôt de la demande et ne figurant pas dans le présent fascicule.

**Description**

L'invention concerne l'utilisation d'au moins dextrine d'amidon de légumineuses pour la préparation d'une composition destinée au couchage d'un papier ou d'un carton plat.

Elle concerne ainsi une composition destinée au couchage du papier ou du carton plat contenant la ou lesdites dextrines de légumineuses.

Elle concerne encore lla dextrine de légumineuses utile à la préparation de la composition selon l'invention.

Elle vise aussi le mode d'élaboration et la préparation de la composition selon l'invention et son utilisation dans l'industrie du papier, à des fins d'ennoblissement du papier, par toute opération de couchage connue de l'homme de l'art, ainsi que le papier obtenu par ces moyens.

Par « amidon de légumineuses » au sens de la présente l'invention, on entend tout amidon extrait de légumineuses, présentant une richesse en amidon d'au moins 95% (sec/sec), assortie d'une teneur faible en matières colloïdales et en résidus fibreux, de préférence, inférieure à 1% (sec/sec). La richesse en amidon est de préférence supérieure à 98%.

La teneur en protéines est avantageusement faible, soit inférieure à 1%, de préférence inférieure à 0,5%, de préférence encore, comprise entre 0,1 et 0,35% (sec/sec).

Par « légumineuses » au sens de l'invention, on entend la famille des papilionacées, dont les représentants les plus importants sont le pois en tout premier lieu, mais aussi le haricot, la lentille, le lupin, la fève, la luzerne et le trèfle.

Par « légumineuses » au sens de la présente invention, on entend plus particulièrement celles pour lesquelles la teneur en amylose de l'amidon est inférieure à 60%, notamment comprise entre 25 et 55%.

Le pois occupe dans ce groupe, et selon ces considérations, une place privilégiée.

De même, l'invention accorde une place toute particulière aux dextrines.

Par dextrine au sens de la présente invention, on entend un amidon modifié en phase sèche, par action de la chaleur, d'une combinaison de la chaleur et d'un réactif chimique ou, éventuellement, par action de rayonnements ionisants.

De nombreux procédés ont été développés, dans le cadre d'un historique industriel riche, faisant appel à l'action de la chaleur, dans un milieu suffisamment sec, en présence ou non, d'un agent chimique. Pour la plupart, qu'ils soient discontinus ou continus, ils font appel à des températures de transformation supérieures à 100°C et à la présence, facultative, d'un acide, généralement minéral, d'un agent alcalin et / ou d'un agent oxydant.

Les dextrines obtenues en présence d'un acide sont les plus répandues. On a coutume de les classer en trois catégories essentielles regroupant :

- Les dextrines blanches, transformées à des températures souvent comprises entre 120 et 170°C, en présence d'agent(s) chimique(s), notamment d'acide, en quantités relativement élevées,
- Les dextrines jaunes, transformées à des températures plus élevées, souvent comprises entre 170 et 230°C, en présence de quantités faibles, voire très faibles, d'agent(s) chimiques, notamment, d'acide,
- Les dextrines dites « British GUM » transformées par la seule action de la chaleur, à température élevée, souvent, supérieure à 230°C.

Les dextrines obtenues par l'action de rayonnements ionisants, plus récentes, ne sont généralement pas reprises dans cette classification.

Dans la grande généralité des cas, la teneur en eau, attachée à la phase dite sèche telle que l'entend l'homme de l'art, est au plus égale à une valeur d'environ 6%.

Les procédés, considérés de façon générale, génèrent différentes réactions. L'importance de chacune d'elles varie avec les paramètres essentiels, comme le taux d'agent chimique, notamment d'acide, la teneur en eau initiale, le profil de température et le temps de réaction.

La réaction d'hydrolyse est significative au début de la transformation et dès 50°C. Liée à la présence d'acide et d'une quantité d'eau encore suffisante, elle diminue la masse moléculaire. Elle reste importante dans la transformation des dextrines blanches.

La réaction de condensation ou réversion forme une liaison $\alpha(1,6)$ à partir d'un alcool primaire d'une chaîne et de l'extrémité réductrice d'une autre chaîne. Elle est favorisée par des températures inférieures ou proches de 150°C.

La réaction de « transglucosydation », formant une liaison $\alpha(1,6)$ en coupant une liaison $\alpha(1,4)$ sans libérer d'eau, est prédominante à des températures supérieures à 150°C. Permettant l'obtention de molécules davantage branchées, elle est essentielle à l'expression des propriétés des dextrines, en particulier, des dextrines jaunes.

D'autres réactions ont également lieu, telles que l' « anhydrisation » interne, entre carbones 1 et 6 ou la recombinaison issue de la réaction entre une extrémité réductrice et un groupement hydroxyle en C2, C3 ou C4.

L'importance, notamment relative, de ces phénomènes confèrent aux dextrines des propriétés spécifiques.

Bien que la dextrine obtenue soit ensuite, dans la plupart des cas, soumise à une opération visant à la réhydrater, souvent pour faciliter sa dispersion et sa dissolution dans l'eau, sa relation à ce solvant est tributaire du niveau de branchement atteint, notamment grâce à la réaction de « transglucosydation ».

Si l'usage d'amidons modifiés et de dextrines, pour le domaine papetier, est décrit, la littérature le concernant, est partagée. Elle traite, d'une part, d'opérations de surfaçage (Size-Press), le plus souvent, en l'absence d'autre liant et, en particulier, de toute charge et/ou pigment. Elle traite aussi de couchage, malgré la longue suprématie des latex et des produits d'origine pétrolière.

On considère en général qu'une opération de surfaçage désigne une enduction d'un papier ou d'un carton plat, réalisée sur machine à papier, à partir d'une composition dont la matière sèche est inférieure à 25%, notamment inférieure à 20%, le plus communément, inférieure à 15%. Souvent, la composition est d'élaboration simple, ne comprenant qu'eau et polymère soluble.

Le surfaçage pigmenté caractérise une composition de surfaçage comprenant, en sus, une charge et/ou un pigment qui n'intervient qu'en quantités limitées, modifiant peu l'extrait sec global. Celui-ci demeure inférieur à 40%, dans la plupart des cas. Il est souvent inférieur à 30%. Les solutions colloïdales qui en constituent la base présentent aussi une matière sèche généralement inférieure à 25%, souvent inférieure à 20%, et même à 15%.

En référence, on peut citer l'ouvrage « Industrial Uses of Starch and its Derivatives » de J.A.Radley, publié par « Applied Science Publishers Ltd » (1976), dont la page 207 et les suivantes (chapitre V, sous-chapitre 5.3) sont consacrées à ces aspects.

Dans le même recueil, un peu plus loin (sous-chapitres 5.6 à 5.9), sont décrites les opérations de couchage, notamment concernées par les amidons modifiés et les dextrines. On entend alors par « couchage », c'est là le cadre de l'invention, une enduction opérée à partir d'une composition complexe, contenant le plus souvent, hors l'eau, des liants naturels et/ou synthétiques, des charges, des pigments, des agents dispersants, des agents améliorant la rhéologie ou la résistance à l'eau, des azurants optiques, et autres.

Elles concernent des compositions dont l'extrait sec reste modeste sur certains matériels (25 à 45% - page 219). Il est plus élevé sur la plupart des machines spécifiques, supérieur à 40%, généralement supérieur à 50%, et pouvant atteindre 65% (même page).

Les extraits secs de compositions les plus élevés sont possibles dès lors que la concentration des solutions d'amidons modifiés et/ou de dextrines est adaptée. Dans le cadre de l'art antérieur, les concentrations utiles de telles colles sont, comme nous l'enseigne par exemple l'ouvrage de Whistler, Bemiller et Paschall « Starch : Chemistry and Technology - Second Edition : Industrial Aspects », publié par Academic Press en 1984, complémentaire au précédent, limitées à 40% environ, notamment dans le cas de conversions réalisées à hautes températures (pages 558 à 565), ceci dans le cadre de combinaisons amidon - latex.

Ces deux ouvrages fournissent les notions essentielles régissant les pratiques courantes d'ennoblissement du papier ou du carton plat par surfaçage, surfaçage pigmenté ou couchage réalisés à partir d'amidons modifiés et de dextrines. Toutefois, l'usage de tels dérivés, issus d'amidons de légumineuses est particulièrement rare.

L'utilisation d'amidon de pois modifié est préconisée dans le brevet européen EP 1 296 790 qui ne considère, de fait, que les amidons de pois présentant une teneur élevée en amylose. Elle recourt en effet à l'appellation (« HA pea starch ») sans que la notion ne soit définie, ledit brevet présentant manifestement une insuffisance de description.

Dans ce brevet, comme dans la demande de brevet US 2005/0008801 qui en est issue, apparaissent des matières sèches de colles comprises entre 12 et 20%, correspondant à une utilisation en surfaçage à 20% environ. En tout état de cause, ces concentrations sont très insuffisantes pour être exploitées pour le couchage du papier.

Il semble, à la lecture du brevet EP 0 945 487, accordé précédemment aux mêmes déposants, qu'il faille comprendre, par la locution « HA », les amidons de pois ayant une teneur en amylose supérieure à 60%, les exemples faisant état d'une teneur plus élevée, égale à 77,4%.

Les teneurs sont cruciales pour les propriétés de résistance aux graisses recherchées, que ce soit sous forme de film (EP 0 945 487) ou par le truchement d'un surfaçage (EP 1 296 790).

D'autre part, dans le brevet US 6 512 108, correspondant au brevet EP 0 945 487, les exemples s'appuient, pour obtenir les propriétés recherchées, sur des produits présentant notamment une masse moléculaire voisine de $2,1.10^6$, jugée trop élevée pour atteindre les valeurs optimales de viscosité et la stabilité recherchée tant en colle qu'en sauce de couchage.

La demande de brevet européen EP 1 281 721 considère des dextrines issues de sources diverses, dont le pois, sans pour autant lui donner une importance particulière, loin s'en faut. Seul, le surfaçage est cité dans un contexte où aucun problème technique ne lui est attaché.

La Demanderesse a elle-même décrit, dans la demande de brevet internationale WO 2005/003456, l'usage de dérivés d'amidons de légumineuses pour l'ennoblissement du papier. La description ne prend en compte que des concentrations limitées des solutions colloïdales et des compositions qui en sont issues, concentrations qui correspondent aux pratiques de surfaçage et fort peu à celles du couchage.

En effet, les exemples sont très clairs de ce point de vue, ne considérant que des colles préparées à 20% de matières sèches et des enductions par technique de surfaçage, exclusivement, à 15%MS.

Les solutions proposées dans ces trois documents sont notoirement insuffisantes et ne répondent pas, pour l'essentiel, aux problèmes techniques actuels. Ils y sont limités à la résistance aux graisses et le cadre majeur du surfaçage, pour l'un, au surfaçage encore, essentiellement, pour les deux autres. L'ampleur des problèmes rencontrés est, de fait, beaucoup plus large et leur caractère notoirement plus aigu.

En effet, il existe un réel besoin à accorder une grande attention à l'énergie, à sa disponibilité et à son coût. La dépense qui y est liée impose que les colles amylacées soient préparées aux matières sèches les plus élevées, de façon à ce que les compositions de couchage soient proposées avec des teneurs en eau les plus limitées. Les augmentations d'extrait sec doivent être compatibles avec le niveau de viscosité nécessaire et utile à la bonne marche des équipements.

Il est important d'assurer, dans ces conditions de matières sèches élevées, la stabilité et l'évolution de la viscosité la plus limitée, tant des colles que des compositions de couchage, notamment face aux paramètres de temps et de température.

D'autres aspects, environnementaux, conduisent à limiter, autant que faire se peut, la participation des matières synthétiques, notamment des latex, dont l'usage, en tant que liant de couchage, est largement répandu.

En outre, les conditions d'approvisionnement difficile de la fécule de pomme de terre conduisent à éviter l'usage de cette matière première.

La prise en compte des notions exposées ci-dessus, doit bien évidemment rester compatible avec l'ensemble des critères économiques et, surtout, techniques, qu'il s'agisse de préparation, de fonctionnement des matériels, que de cahier des charges relatif aux caractéristiques et propriétés conférées aux papiers produits.

En tout état de cause, il existe un réel besoin à concilier les problèmes techniques les plus aigus rencontrés par l'industrie papetière, notamment dans le cadre technique du couchage, tels qu'ils se posent dans l'environnement exigeant actuel, et notamment:

- d'assurer une préparation adaptée de la solution colloïdale de la matière amylacée à des matières sèches aussi élevées que possible,
- de permettre, par des apports caloriques limités à la réalisation de ladite solution, un premier gain en énergie,
- d'autoriser, en conséquence, l'élaboration de compositions de couchage, quel qu'en soit l'objectif et en particulier, pour un ennoblissement du type de ceux de couche externe (« Top Couche »), présentant elles-mêmes les matières sèches les plus élevées,
- de garantir, tant à la solution colloïdale qu'à la composition qui en est issue, une stabilité suffisante, notamment dans le temps, telle que souhaitée par l'homme de l'art,
- de permettre une économie d'énergie intéressante, que ce soit à la confection de la composition, à son dépôt sur le papier ou, surtout, à son séchage,
- de garantir, en regard, des propriétés rhéologiques adaptées à la technique d'enduction retenue, de façon à, notamment, s'assurer d'un comportement adaptée de la composition sur la machine,
- de maîtriser les propriétés d'absorption et de mouillabilité du papier,
- d'assurer les propriétés physiques demandées, en particulier relatives à la rugosité, à la porosité, à la rigidité, à la résistance à la rupture,
- d'apporter les propriétés optiques voulues pour le papier, notamment relatives à sa blancheur, à son opacité ou à son brillant,
- de garantir les qualités nécessaires à une impression correcte, notamment de transfert d'encre, de moutonnement, de salissure ou de maculage, différentes défaillances qui peuvent trouver leur origine dans le papier certes, mais aussi dans la rugosité et la porosité après enduction, dans la nature des liants et leur éventuelle migration, dans la nature des charges et pigments qui peuvent agir et corriger les défauts décrits ci-dessus. En particulier, le moutonnement (« mottling »), manifestation fort crainte de l'imprimeur, peut être dû à des facteurs touchant au papier, qu'il s'agisse du support, de la composition et de sa formulation et/ou du séchage, mais aussi à des paramètres afférant à la machine, en particulier la nature de l'encre, la pression et/ou la vitesse. Dans ces diverses possibilités de défaillances, nous distinguons essentiellement le moutonnement dû au transfert des encres (« back trap »), le moutonnement dû à la superposition des encres (« trapping ») et le moutonnement humide (action de l'eau).

Tous ces critères demandent au surplus à être respecté dans un contexte économique satisfaisant, tant en termes d'approvisionnement et de prix de revient de la source d'amidon que de coût de sa transformation. Ces données économiques intègrent les aspects relatifs aux autres ingrédients de la composition, rendus nécessaires par les impératifs de performances.

Il est en outre nécessaire d'y ajouter les coûts liés à la récupération et au recyclage des papiers.

Il est aussi admis d'y associer les aspects relatifs à la toxicité supposée et à la biodégradabilité des matières.

S'il existe des documents qui décrivent l'élaboration de compositions utiles à différentes industries, comprenant des amidons modifiés et des dextrines de diverses origines, on constate que, hors les trois documents cités ci-dessus, ils considèrent des problèmes techniques étrangers aux domaines papetiers. Dans ces conditions, l'homme de l'art papetier n'est pas en situation de résolution de ses problèmes spécifiques.

Pourtant, la connaissance établie en la matière, a autorisé des démarches spécifiques telles que celle décrite, par exemple, dans la demande de brevet internationale WO 04/076163, qui décrit l'utilisation de dextrines dans des colles « activables » à l'eau, en solution ou en émulsion. Aucune sélection relative à l'origine de l'amidon n'apparaît dans ledit document.

La demande de brevet internationale WO 92/18325 décrit des matériaux d'emballage biodégradables faisant appel à des farines ou des amidons, notamment de légumineuses. La dextrinisation y est dite partielle. Elle est pratiquée dans un appareil d'extrusion, apparemment à une température basse, non précisée. La présence impérative d'un agent plastifiant constitue un paramètre majeur conduisant à affirmer que ladite opération ne correspond pas à la notion admise de l'homme de l'art.

La demande de brevet US 2001/0026827 décrit l'obtention de dextrines obtenues par transformation thermique d'un amidon issu de la pomme de terre, du manioc, du haricot, de céréales comme le blé ou le maïs, y compris l'amidon de maïs riche en amylose, à l'exclusion de l'amidon de petits pois (« green pea »). Elles sont destinées au remplacement des matières grasses ou de la gélatine dans des produits alimentaires manufacturés.

La demande de brevet internationale WO 00/41576 décrit divers amidons, notamment modifiés, dont les dextrines, utiles à l'industrie alimentaire en tant qu'amidons dits « résistants », ne s'intéressant qu'aux propriétés propres au domaine, sans que les conditions de leur obtention ne soient abordées.

De même, le brevet US 5 512 311 ne concerne que les industries alimentaires. S'il cite les dextrines, notamment issues de légumineuses, il ne les définit pas, leur préférant d'ailleurs certains éthers d'amidon.

La demande de brevet internationale WO 01/60867 décrit une méthode de modification thermique particulière, ne considérant qu'une gamme basse de températures comprises entre 50 et 120°C, de préférence comprises entre 65 et 110°C, en particulier, comprises entre 80 et 100°C. Comme la demande de brevet US 2001/0026827, elle introduit une matière première inhabituelle au milieu des sources les plus classiques d'amidon, le haricot.

Le brevet US 6 423 775, quoique s'intéressant plus spécifiquement aux dextrines issues d'un amidon de légumineuses, ne les définit pas, celles-ci ne constituant qu'un produit intermédiaire conduisant à un copolymère greffé issu dudit amidon.

La demande de brevet français FR 2 309 638 s'attache à un procédé d'hydrolyse particulier de farines de céréales ou de légumineuses, la séparation des protéines étant subséquente à la transformation de l'amidon en milieu apparemment aqueux. Il est toutefois davantage attaché à la transformation en dextrose et l'obtention de dextrines n'est pas exposée.

Dans l'article « Indigestible Starch of P. Lunatus by Pyroconversion : Changes in Physicochemical Properties » (Starch/Stärke - juin 2004 - pages 241 à 247), les auteurs décrivent les travaux réalisés exclusivement sur le haricot de Lima, dans des conditions de dextrinisation relativement douces, notamment en termes de températures. Les dextrines obtenues sont appréciées sur le seul critère de la digestibilité, spécifique à l'alimentation, comparé à celui présenté par d'autres légumineuses, les lentilles.

Si l'article, tiré de Starch/Stärke 49(1997) « Sàureabbau von Stärke unter semi-dry Bedingungen", considère l'amidon de pois, il ne traite que d'une transformation originale, en milieu semi-sec, dans le cadre d'un temps de séjour très court dans un champ de microondes, permettant d'accéder à des amidons modifiés utiles pour remplacer des matières grasses dans l'industrie alimentaire. Une telle méthode, en phase semi-sèche, ne permet pas notamment d'atteindre le niveau souhaité de « transglucosydation » des dextrines traditionnelles.

L'article « Structural Studies on pea and potato starches using enzymatic methods » (Carbohydrates Europe - mars 1999) utilise la terminologie "dextrine-limite" pour des produits traités par amylase(s), sans en préciser les propriétés et / ou destinations.

De la même façon, d'autres articles, tels que, par exemple, « Characterisation of Phosphorus in Starch by P-Nuclear Magnetic Resonance Spectroscopy » (Cereal Chemistry 71(5) 488-493, 1994), « Quantitative Measurement of Total Starch in Cereal Flours and Products" (Journal of Cereal Science 20(1994) 51-58), "Studies on the Structure of Pea Starch" - Parts 1, 2, 3, 4 (Starch/Stärke 45 (1993)) n'exposent que des aspects purement analytiques.

A l'examen de cet ensemble de documents, il apparaît que les amidons modifiés et les dextrines, notamment issues d'amidons de légumineuses, qui représentent, de fait, une très grande famille, sont peu décrites, tant dans leur nature que dans leurs propriétés. Elles ont été surtout étudiées pour l'intérêt qu'elles présentent dans l'industrie alimentaire.

En conséquence, il apparaît qu'aucun des documents cités, ou la conjugaison de plusieurs d'entre eux, ne permet de résoudre les problèmes techniques posés par le couchage du papier, notamment de type dit de « Top couche », ni de parvenir à des dérivés présentant les caractéristiques et les propriétés souhaitées.

Il est ainsi du mérite de la Demanderesse que d'avoir pu déterminer que l'utilisation de certains dérivés d'amidons de légumineuses, et notamment de pois, permettait d'apporter une réponse satisfaisante aux problèmes techniques posés par l'ennoblissement du papier.

Plus précisément, il est observé que l'ensemble des problèmes techniques est résolu au mieux par l'utilisation, pour la préparation d'une composition de couchage d'un papier ou d'un carton plat présentant une matière sèche supérieure à 25%, d'une dextrine de légumineuses caractérisé en ce qu'il présente, concomitamment, un poids moléculaire, déterminé selon un test A, au plus égal à $0,40.10^6$, et au moins égal à $0,11.10^6$, et une température dite de transition ou de transformation sol/gel, déterminée selon un test B, inférieure à 20°C, une teneur en amylose inférieure à 60% et un taux de branchement, déterminé par analyse RMN du proton, supérieur à 4%.

La présente invention a également pour objet une dextrine d'amidon de légumineuses présentant simultanément :

- une teneur en amylose inférieure à 60%,
- un poids moléculaire, déterminé selon un test A, au plus égal à $0,40.10^6$, et au moins égal à $0,11.10^6$, et
- une température de transformation sol/gel, déterminée selon un test B, inférieure à 20°C,
- un taux de branchement, déterminé par analyse RMN du proton, supérieur à 4%.

On tire un meilleur avantage encore à ce que la dextrine de légumineuses présente une teneur en amylose comprise entre 25 et 55%.

La masse moléculaire peut être déterminée par les moyens et méthodes accessibles à l'homme de l'art. La Demanderesse privilégie toutefois le test A, faisant appel à un tamisage moléculaire avec détection par diffusion de la lumière.

Sur ce point, la Demanderesse attache une importance certaine à la sélection présentée. En effet, s'il est possible d'utiliser un dérivé d'amidon de légumineuses présentant une masse moléculaire supérieure à $0,40.10^6$ et en particulier supérieure à $0,45.10^6$, leur usage entraînera une augmentation sensible de la viscosité de la colle et, en conséquence, un gain moindre sur les extraits secs des compositions.

Dans le cadre du test B, les différentes solutions colloïdales font l'objet d'appréciations rhéologiques durant une étape de refroidissement, selon les principes aujourd'hui largement établis et répandus de détermination de viscosités complexes $\eta^*$.

Ces mesures sont effectuées à l'aide d'un rhéomètre dynamique AR2000, distribué par TA Instrument, en utilisant des cylindres coaxiaux 14/15mm. La rampe de refroidissement linéaire est comprise entre 80 et 5°C, à raison de 1°C/minute. La contrainte de sollicitation colloïdale varie en fonction de la réponse de l'échantillon testé. La fréquence est fixée à 1 Hertz.

De ce point de vue aussi, s'il est possible, en toute généralité, d'utiliser une dextrine de légumineuses présentant une masse moléculaire supérieure à $0,40.10^6$, son usage s'accompagnera d'une augmentation sensible de la température de transformation sol/gel, traduisant la stabilité amoindrie des colles, susceptible de poser de graves problèmes à la préparation des compositions.

Il a été en outre observé qu'il était plus avantageux encore de recourir à l'utilisation d'une dextrine de légumineuses caractérisé en ce qu'il présente un taux de branchement, déterminé selon le test C, supérieur à 4%, de préférence d'au plus 12%, et plus préférentiellement encore d'au plus 10%.

Un taux de branchement voisin de 4,4%, par exemple, représente une augmentation estimée à environ 50%, lorsqu'on le compare au taux initial de l'amidon de légumineuses dit natif et/ou au taux de branchement d'un amidon de légumineuses seulement fluidifié par les moyens chimiques connus ou correspondant à la phase première de dextrinisation, consistant essentiellement en une hydrolyse.

Le test C assure la détermination du taux de liaisons glucosidiques $\alpha 1,6$ des dérivés d'amidon de légumineuses conformes à l'invention par analyse RMN du proton. Le taux de branchement est alors exprimé en pourcentage correspondant à la quantité de signal du proton porté par le C1 d'un motif anhydroglucose qui lie un autre motif anhydroglucose par une liaison $\alpha 1, 6$, lorsqu'on a donné la valeur 100 à l'ensemble des signaux des protons portés par tous les C1 présents sur lesdits dérivés d'amidon de légumineuses.

Dans ce cadre, la Demanderesse a pu observer qu'il était particulièrement utile de recourir à l'utilisation d'une dextrine issue d'un amidon de légumineuses, notamment de pois, au sens de la présente invention, c'est-à-dire obtenue dans le cadre d'un effet thermique majeur, notamment en milieu acide, qu'il s'agisse de conditions continues ou discontinues.

Le recours à l'utilisation de ces dextrines de légumineuses permet d'affronter toutes les possibilités de couchage, notamment dans le cadre d'une couche externe, couramment dite « Top couche ».

En effet, les dextrines de légumineuses conformes à l'invention et autorisent la préparation, dès lors qu'un matériel adapté est disponible, de solutions colloïdales à des concentrations élevées, supérieures à 30 de matières sèches, voire supérieures à 40% et même, de l'ordre de 50%.

Le recours à des matériels de préparation plus performants encore, permet de dépasser ces extraits secs sans que n'apparaissent une quelconque incompatibilité en termes de viscosité et de stabilité de celle-ci.

Ainsi, il est possible de parvenir à une composition du couchage papier ou du carton papier, qui est caractérisée en ce qu'elle présente une matière sèche supérieure à 25%, de préférence supérieure à 30%, plus préférentiellement encore, comprise entre 35 et 75%, qu'elle contient au moins dextrine de légumineuses présentant un poids moléculaire au plus égal à $0,40.10^6$, de préférence au moins égal à $0,04.10^6$, plus préférentiellement au moins égal à $0,11.10^6$ et notamment compris entre $0,12.10^6$ et $0,40.10^6$, et une température de transformation sol/gel inférieure à 20°C, avantageusement inférieure à 10°C, une teneur en amylose inférieure à 60% et un taux de branchement, déterminé par analyse RMN du proton, supérieur à 4%.

On note que, de façon intéressante, une température de 40°C correspond à une température minimale de stockage de la colle d'amidon.

Les compositions élaborées à partir des dextrines de légumineuses conformes à l'invention sont susceptibles de répondre à toutes les situations en termes d'extraits secs en particulier. Ceux-ci peuvent être compris dans une très large gamme, allant du couchage à bas extrait sec, cependant légèrement supérieur à 25%, jusqu'aux opérations de couchage faisant appel à des compositions de couchage qui présentent une matière sèche supérieure à 30%, notamment comprise entre 35 et 75%, notamment comprise entre 45 et 73%, en particulier, entre 50 et 72%.

Des matières sèches aussi élevées que 72%, voire 73%, et même 75%, revêtent l'importance, pour chaque point gagné, d'un gain énergétique, au séchage, très sensible.

L'effet bénéfique est d'autant plus prononcé que l'on fait appel à une dextrine de légumineuses caractérisé en ce qu'elle présente concomitamment une teneur en amylose comprise entre 25 et 55%, un poids moléculaire au moins égal à $0,04.10^6$, de préférence au moins égal à $0,11.10^6$, notamment compris entre $0,12.10^6$ et $0,40.10^6$ et une température de transformation sol/gel inférieure à 20°C, avantageusement inférieure à 10°C.

La présente invention a d'ailleurs pour objet une dextrine de légumineuse caractérisé par les gammes de teneur en amylose, de poids moléculaire et de température de transformation sol/gel mentionnées dans le paragraphe précédent.

On tire un meilleur avantage à ce que, au-delà de ces caractéristiques, la dextrine de légumineuses présente un taux de branchement, déterminé selon le test C, supérieur à 4%, de préférence d'au plus 12%, et plus préférentiellement encore d'au plus 10%.

Les extraits secs les plus élevés sont d'autant plus facilement obtenus, et dans les meilleures conditions, que la dextrine de légumineuses est associée à un ou des produits de technologie moderne, eux-mêmes destinés à améliorer le comportement rhéologique et / ou augmenter la matière sèche des compositions, tels que, par exemple, les polymères hyperbranchés comme ceux décrits dans les demandes de brevet internationales WO 99/16810, 00/58388 et 00/56804.

Cet effet est particulièrement apprécié dans les conditions de couchage où l'utilisation de dextrines de légumineuses permet de réduire sensiblement à très sensiblement, les liants synthétiques traditionnels, qu'ils soient solubles ou présentés sous forme d'émulsions (latex).

Une opération de couchage visant une couche externe dite « Top-couche » notamment, illustre tout à fait bien les possibilités de hauts extraits secs et de réduction sensible des quantités de latex.

En tout état de cause, les propriétés relatives à la viscosité en solution aqueuse des produits selon l'invention, ainsi qu'à la stabilité remarquable observée, apparaissent tout à fait compatibles avec l'ensemble des contraintes techniques auxquelles l'homme de l'art est confronté.

Ces caractéristiques autorisent, en premier lieu, une préparation aisée des solutions colloïdales à des matières sèches élevées, dans le cadre d'apports caloriques limités et d'un premier gain sensible en énergie.

Elles permettent l'élaboration de compositions, utiles au couchage du papier et du carton plat, appartenant à une très large gamme, en particulier, aptes à assurer une opération de couchage assurant une couche externe (« Top Couche »), et/ou celles présentant les matières sèches les plus élevées.

Elles garantissent, tant à la solution colloïdale qu'à la composition qui en est issue, une stabilité suffisante, notamment dans le temps, telle que souhaitée par l'homme de l'art.

Elles permettent une économie d'énergie intéressante, que ce soit à la confection de la composition, à son dépôt sur le papier ou, surtout, à son séchage.

Elles garantissent, en regard, des propriétés rhéologiques adaptées à la technique d'enduction retenue.

Les conditions de travail attachées à cette dernière définissent, au-delà, des propriétés essentielles que doit posséder la composition, telles qu'un comportement adapté sur la machine, par exemple, relatif à la maîtrise et à l'absence de projections, à la rétention d'eau ou à la couverture des fibres du support, notamment dans le cadre de l'adhésion de la couche avec ce support fibreux.

Dans le cadre de l'assurance d'une satisfaction suffisante à la dépose, elles assurent l'obtention d'une couche, d'une « Top-couche » en particulier, présentant les caractéristiques requises pour le papier.

Les qualités recherchées sont notamment attachées aux propriétés physiques comme la rigidité, la résistance à la rupture, la porosité, la rigidité ou le lissé, aux propriétés optiques telles que blancheur, opacité et brillance, ainsi qu'à la maîtrise des propriétés d'absorption et de mouillabilité du papier.

Lesdites qualités relèvent de tests bien connus de l'homme de l'art, qui lui permettent d'appréhender et de garantir l'aptitude à l'impression en le mettant à l'abri des diverses défaillances décrites ci-dessus telles que les transferts d'encre, les salissures, les maculages et en particulier, le moutonnement, fort craint de par les origines nombreuses qu'il peut avoir.

Les différents aspects de la présente invention, relatifs à la formulation et à l'élaboration de compositions adhésives usuelles, notamment ceux relatifs au degré de satisfaction face aux critères évoqués ci-dessus, vont être décrits de façon plus détaillée à l'aide des exemples qui suivent, qui ne sont aucunement limitatifs.

Exemple 1 :

On disposait de différents produits utiles pour le couchage du papier, issus de différentes bases amylacées (exemples comparatifs) :

- 3 dextrines à base d'amidon de maïs, DM1, DM2 et DM3, présentant des masses moléculaires en poids et des viscosités en solution colloïdale différentes, obtenues par transformation en continu,
- Un amidon de maïs oxydé MOx, ainsi que
- 4 fécules de pomme de terre oxydées, FPO1, FPO2, FPO3 et FPO4.

On leur a opposé 3 dextrines DP1, DP2 et DP3, obtenues par procédé continu, ainsi qu'un amidon de pois fluidifié et acétylé en phase lait (exemple comparatif), tous issus d'un amidon de pois qui présentait une richesse en amidon supérieure à 98% et une teneur en protéines inférieure à 1%.

La dextrine référencée DP1 avait précisément été obtenue selon un procédé comprenant un traitement thermique à 138°C dans un réacteur en continu, en présence d'acide chlorhydrique à 0.18% en poids sec par rapport au poids sec d'amidon, le temps de contact entre l'acide et l'amidon étant fixé à 5 minutes et le traitement thermique étant ensuite poursuivi pour assurer la réticulation interne du dérivé d'amidon. Les dextrines référencées DP2 et DP3 avaient été obtenues selon un procédé similaire, mais dans lequel la quantité d'acide mise en oeuvre et/ou la température de traitement thermique étaient plus bas.

Tous ces produits ont été analysés pour la détermination de leur masse moléculaire en poids selon le test A, puis soumis à une opération thermique de cuisson en Jet-Cooker (eau présentant une dureté TH 10), pendant 3 minutes à 140°C, à l'issue de laquelle les colles obtenues, ajustées à 35% de matières sèches (%MS), ont été divisées en deux parties.

L'une a été soumise à une mesure de viscosité Brookfield à 60°C (100tours/minute).

Les premières mesures étaient les suivantes :

| | Masse moléculaire en poids Mw | Viscosité Brookfield à 60°C - 100 trs/mn (mPa.s) |
|---|---|---|
| Dextrine de maïs DM1 | $4,2.10^4$ | 55 |
| Dextrine de maïs DM2 | $15.10^4$ | 117 |
| Dextrine de maïs DM3 | $79.10^4$ | 240 |
| Amidon de maïs oxydé AMOx | $70.10^4$ | 183 |
| Fécule oxydée FPO1 | $86.10^4$ | 290 |
| Fécule oxydée FPO2 | $54.10^4$ | 220 |
| Fécule oxydée FPO3 | $40.10^4$ | 148 |
| Fécule oxydée FPO4 | $130.10^4$ | 290 |
| Dextrine de pois DP1 | $5,42.10^4$ | 47 |
| Dextrine de pois DP2 | $45.10^4$ | 200 |
| Dextrine de pois DP3 | $180.10^4$ | 350 |
| Amidon de pois fluidifié acétylé APFA | $45.10^4$ | 210 |

L'autre partie a été soumise à des mesures de viscosité complexes, selon le test B, dans le cadre d'une phase de refroidissement entre 80 et 5°C.

| | Viscosité complexe 60°C (mPa.s) | Température de transformation sol/gel | Angle de déphasage à 60°C |
|---|---|---|---|
| DM1 | 617 | 78°C | 46 |
| DM2 | 719 | 62°C | 42 |
| DM3 | 210 | 50°C | 90 |
| AMOx | 307 | < 5°C | 79 |
| FPO1 | 289 | < 5°C | 79 |
| FPO2 | 197 | < 5°C | 90 |
| FPO3 | 114 | < 5°C | 90 |
| FPO4 | 337 | < 5°C | 89 |
| DP1 | 35 | < 5°C | 90 |
| DP2 | | 44°C | |
| DP3 | | 45°C | |
| APFA | 151 | < 5°C | 90 |

Les solutions colloïdales intéressant l'amidon de pois, qu'elles soient issues d'une dextrine selon l'invention (DP1) ou d'un amidon de pois fluidifié et acétylé, de masses moléculaires adaptées, ne présentaient pas de température de transformation sol/gel dans la phase de refroidissement. L'absence de point de rupture dans le tracé de viscosité traduisait l'absence de rétrogradation dans ladite phase et garantissait une stabilité remarquable des colles aux températures d'utilisation, même à concentration élevée, par exemple, de l'ordre de 50%MS.

Exemple 2 :

On disposait de deux dérivés différents d'amidon de pois. L'un était un amidon de pois fluidifié et acétylé ensuite (APFA2). L'autre était une dextrine de pois selon l'invention, obtenue par traitement thermique continu en milieu acide et à faible humidité (DP4). Cette dextrine avait été obtenue selon un procédé similaire à celui utilisé pour l'obtention de la dextrine DP1 de l'Exemple 1, excepté que la quantité d'acide était de 0,10% et la température dans le réacteur de 140°C. Ces deux produits ont fait l'objet d'une cuisson en continu, en « Jet-Cooker », pendant 3 minutes à 140°C, à une matière sèche telle que les colles obtenues, compte tenu de l'apport de la vapeur, étaient à 35%MS. Les colles étaient caractérisées de la façon suivante :

| | Masse moléculair e en poids Mw | Température de transformatio n sol/gel | Viscosité Brookfiel d à 60°C (mPa.s) | Viscosité complexe à 60°C (mPa.s) | Taux de branchemen t (liaisons $\alpha$-1,6 en %) |
|---|---|---|---|---|---|
| APFA2 | $0,45.10^6$ | 5°C | 200 | 151 | 2,8 |
| DP4 | $0,39.10^6$ | 6°C | 78 | 35 | 4,4 |

La dextrine de pois selon l'invention présentait des viscosités, complexe ou apparente, inférieures à celles de l'amidon de pois fluidifié et acétylé, les masses moléculaires des deux dérivés étant cependant très proches l'une de l'autre.

Ce comportement, corrélé au taux de branchement, déterminé selon le test C, était favorable à la préparation de compositions ayant les extraits secs les plus élevés.

Exemple 3 :

Les solutions colloïdales de l'exemple 1 participaient ici à l'élaboration de compositions de couchage d'un papier destiné à l'impression « offset ». On cherchait à approcher au mieux une matière sèche voisine de 62,5%, un pH de 8,5 et une viscosité Brookfield de 1200mPa.s à 25°C (100 tours/minute). La formulation choisie comprenait :

Pigments : SETACARB® 85, 60 parties SUPRAGLOSS® 95, 40 parties,
Latex : 8 parties, et amidon : 5 parties,

Epaississant : FINNFIX® (CMC) : 0,5 partie,
Dispersant : DISPEX® N40 : 0,06 partie,
Insolubilisant : URECOLL® S : 0,5 partie,
Lubrifiant : NOPCOTE® C104 : 0,4 partie.

Un témoin était constitué par une formule ne comportant pas d'amidon, conçue avec 12,5 parts de latex.

On a procédé à diverses mesures de viscosité :

- sur viscosimètre Brookfield à 25°C et 100 tours/minute (10s$^{-1}$),
- sur rhéomètre AR2000 (2500s$^{-1}$),
- sur viscosimètre Herculès (40 000s$^{-1}$ environ),
- viscosimètre capillaire (1 000 000s$^{-1}$).

|  | Brookfield 100trs/mn 10s$^{-1}$ | AR2000 2500s$^{-1}$ | Herculès 40 000s$^{-1}$ | Capillaire 10$^6$s$^{-1}$ |
|---|---|---|---|---|
| Témoin latex | 1280 | 67 | 38 | 38 |
| DM1 | 1260 | 81 | 46 | 44 |
| DM3 | 3000 | 160 | 69 | 57 |
| DM2 | 1880 | 134 | 59 | 53,5 |
| AFPA | 3080 | 200 | 66 | 59 |
| DP1 | 1280 | 86 | 48 | 47 |
| AMOx | 2720 | 150 | 62 | 52 |
| FPO2 | 3700 | 204 | 74 | 53 |
| FPO1 | 4800 | 239 | 75 | 61 |
| FPO3 | 2440 | 171 | 69 | 50 |
| FPO4 | 6000 | 242 | 73 | 55 |

Seules, les dextrines les plus dégradées atteignaient l'objectif de viscosités utiles au couchage.

Si elles étaient à base de maïs ou de pois, ces exemples 1 et 3 montrent que la dextrine de pois DP1 selon l'invention était la seule qui permettait d'atteindre les objectifs fixés de stabilité de la colle, même à extrait sec relativement élevé. La viscosité de la sauce de couchage élaborée avec la dextrine de pois était satisfaisante, notamment face au témoin que constituait la formule « tout latex », tandis que le produit référencé APFA conduisait à des valeurs qui l'étaient un peu moins de ce point de vue. La dextrine de pois était le dérivé amylacé qui garantissait le mieux les propriétés rhéologiques adaptées à la technique d'enduction retenue.

Exemple 4 :

On a procédé ensuite à des mesures d'angle de déphasage et de viscoélasticité sur rhéomètre AR2000 à 25°C, ainsi qu'à des mesures de capacité de la rétention d'eau par le test dit « SD Warren », connu de l'homme de l'art.

|  | G' à 25°C | Delta à 25°C | Contrainte seuil à 25°C (mPa) | Rétention d'eau (sec.) |
|---|---|---|---|---|
| Témoin latex | 475 | 6 | 4 | 130 |
| DM1 | 419 | 7,5 | 2 | 190 |
| DM3 | 1016 | 9,2 | 4 | 170 |
| DM2 | 707 | 9,4 | 1,6 | 175 |
| AFPA | 977 | 9 | 10 | 145 |
| DP1 | 553 | 7,7 | 5 | 160 |
| AMOx | 1094 | 8 | 6 | 145 |

(suite)

|  | G' à 25°C | Delta à 25°C | Contrainte seuil à 25°C (mPa) | Rétention d'eau (sec.) |
|---|---|---|---|---|
| FPO2 | 1207 | 9,3 | 8 | 160 |
| FPO1 | 1332 | 8,3 | 15,9 | 170 |
| FPO3 | 1155 | 8,2 | 8 | 180 |
| FPO4 | 1408 | 8,2 | 20 | 145 |

Toutes les compositions avaient un comportement élastique marqué, révélé par des angles de déphasage compris entre 6 et 10 degrés, et un caractère rhéofluidifiant.

Les viscosités complexes à bas cisaillement étaient directement liées au module élastique G'.

On peut dire que, globalement, la dextrine de pois DP1 selon l'invention présentait un comportement rhéologique plus favorable que les dextrines de maïs ou l'amidon de pois hydrolysé acétylé.

On sait, au-delà, que les compositions présentent un seuil d'écoulement supérieur à 10mPa génèrent des problèmes sur machine, notamment au pompage. C'était ici le cas de deux fécules oxydées, alors que l'amidon de pois hydrolysé acétylé révélait un comportement juste acceptable.

La rétention d'eau, avec les produits amylacées, était supérieure à celle de la composition « tout latex ».

Si elles étaient voisines les unes des autres, on peut toutefois noter l'excellent comportement des dextrines, notamment, la dextrine de pois DP1 selon l'invention qui, pourtant, présentait une masse moléculaire faible.

Exemple 5 :

On a utilisé ici un kit particulier comprenant un accessoire constitué d'un cylindre perforé en son centre, installé sur l'ACAV Viscosimeter (ACA, distribué par Fanel Solution), à la place du capillaire. Grâce à ce dispositif, on appréhendait des viscosités dites « extensionnelles » ou « élongationnelles ». La composition subissait, sur ce dispositif, un passage forcé sous pression. Sur ces bases, il était possible de calculer le nombre d'Euler, directement corrélé à la viscosité extensionnelle.

$$\text{Nombre d'Euler} = \frac{P}{1/2*\rho*v} \ ,$$

où P est la pression exercée sur la composition pour l'obliger à s'écouler au travers de l'orifice, $\rho$ est la masse volumique de la composition et v est la vitesse de son écoulement dans l'orifice, à une température de 25°C.

Cette viscosité correspond à la capacité de la composition à s'allonger sous une contrainte de type traction ou étirement, et non pas de cisaillement. Elle revêt, notamment, une importance certaine dans le cadre de couchage sans contact.

Elle permet plus généralement d'appréhender, dans le cadre du comportement sur la machine et sur l'installation industrielle, la propension aux éclaboussures (« misting »), en particulier, à haute vitesse, sur « Film-Press » par exemple, et éventuellement, l'aptitude à la filtration.

Dans le cas présent, les formules appliquées étaient à 100 parties de carbonate de calcium HYDROCARB® 90 pour 12 parties de latex, pour le témoin.

Elles étaient à base du même carbonate, pour les compositions comprenant de l'amidon, avec 10 parties de latex et 3 parties d'amidon pour 100 parties de charge.

Les compositions contenaient un agent tensio-actif dosé à 0,2% par rapport à l'eau. Elles étaient à une matière sèche comprise entre 62 et 63% et à pH réglé à 9,0-9,5.

|  | Viscosité extensionnelle (Nombre d'Euler) |
|---|---|
| Dextrine de maïs DM2 | 0,926 |
| Amidon de pois fluidifié acétylé APFA | 1,274 |
| Dextrine de pois DP1 | 1,007 |

Les amidons modifiés de pois et les dextrines de pois présentaient des nombres d'Euler et des viscosités « extensionnelles » supérieurs à ceux de leurs homologues obtenus à partir d'autres ressources. Ce constat traduisait une plus grande cohésion sous une contrainte dite « élongationnelle », des produits à base de pois permettant une meilleure maîtrise des déposes et au-delà, celles d'éventuelles projections sur machine.

Exemple 6 :

La plupart des compositions de couchage des exemples 3 et 4 ont été utilisées dans des opérations d'enduction réalisées, grâce à un matériel de type lame, adapté à une coucheuse pilote DIXON, sur un support d'un grammage de 39g/m$^2$, très peu collé (Indice Cobb voisin de 50), à une vitesse de 30m/mn. Seule, la composition issue de la fécule oxydée FPO4 n'a pas pu être enduite du fait d'un seuil d'écoulement trop important, comme indiqué précédemment.
La dépose recherchée était de 13g/m$^2$/face.
Tous les papiers couchés obtenus ont été calandrés, par un seul passage à 90°C et 3,5 bars, avant analyses.
Les caractéristiques de résistance et de rigidité du papier couché n'ont, dans aucun cas, subi de détérioration notable. Nous nous sommes alors attachés à apprécier les caractéristiques touchant directement à la qualité du couchage et à l'impression prévisible, telles que le lissé (Bendtsen), la porosité (Bendtsen), la mouillabilité (Indice Cobb), ainsi qu'aux évaluations sur appareil IGT à sec (encre 3804 -7m/s).

| | Dépose g/m$^2$ | Grammage g/m$^2$ | Lissé (ml/mn) | Porosité (ml/mn) | Indice Cobb | IGT sec |
|---|---|---|---|---|---|---|
| Support | 0 | 38 | 100 | 99 | 50,1 | 3,5 |
| latex | 14 | 51 | 46 | 5 | 46,2 | 4,29 |
| DM1 | 12,6 | 50 | 48 | 6,5 | 53,5 | 3,66 |
| DM3 | 14 | 52 | 40 | 5 | 49,2 | 2,54 |
| DM2 | 13 | 50,5 | 39 | 5,5 | 50,4 | 7 |
| APFA | 13,9 | 52 | 47 | 6 | 50,9 | 2,87 |
| DP1 | 12,7 | 51,5 | 83 | 8 | 51,7 | 2, 71 |
| AMOx | 14 | 51,5 | 41 | 5,5 | 49 | 3,18 |
| FPO2 | 13,4 | 51 | 45 | 7 | 49,2 | 2, 71 |
| FPO1 | 12,5 | 50 | 53 | 7,5 | 51,6 | 3,18 |
| FPO3 | 12,8 | 51 | 35 | 6 | 39,9 | 5,54 |

Qu'il s'agisse de lissé, de porosité ou de propriétés de mouillage, on a constaté que tous les papiers enduits présentaient des caractéristiques correctes.
Les propriétés optiques ont aussi été considérées :

| | Blancheur | Brillance | Opacité |
|---|---|---|---|
| Support | 55,3 | 20,6 | 83,8 |
| latex | 60,3 | 43,4 | 91,55 |
| DM1 | 62,65 | 38 | 91,35 |
| DM3 | 61,2 | 41,7 | 92,15 |
| DM2 | 63,05 | 39,8 | 91,1 |
| APFA | 62,8 | 38,1 | 91,9 |
| DP1 | 61,6 | 39,2 | 91,9 |
| AMOx | 63,25 | 39,9 | 91,4 |
| FPO2 | 61,9 | 39,7 | 91,75 |
| FPO1 | 63,75 | 35,2 | 91,1 |
| FPO3 | 63,6 | 39,8 | 90,3 |

Les mesures enregistrées étaient convenables. Hors la brillance élevée obtenue avec la formule tout latex au détriment de la blancheur, les valeurs s'avéraient voisines.

On peut avancer que, dans des conditions de préparation de colles à extraits secs assez élevés (35%MS) et courants, et pour des compositions présentant des concentrations moyennement hautes, les amidons modifiés de pois, et la dextrine de pois DP1 selon l'invention en particulier, offraient une élaboration aisée de par la rhéologie et la stabilité des colles, et un comportement adéquat des sauces sur machine.

L'utilisation confortable de ces dérivés de pois dans ces conditions de préparation était renforcée par des propriétés physiques et optiques intéressantes et surtout, par une imprimabilité très satisfaisante.

Une estimation globale peut consister en une notation de chacune des caractéristiques, allant de 0, pour un niveau insuffisant, à 3, exprimant une satisfaction totale.

L'exemple 6, élargi à quelques autres données telles la rigidité sens marche, la longueur sens marche et les énergies de surface (composantes dispersive et polaire selon Owens Wendt 2) conduisait ainsi à la notation suivante :

|  | FPO3 | DM2 | FPO1 | APFA | DM3 | DP1 | DM1 | AMOx |
|---|---|---|---|---|---|---|---|---|
| Blancheur | 1 | 2 | 1 | 2 | 3 | 2 | 2 | 2 |
| Opacité | 1 | 1 | 1 | 1 | 1 | 1 | 1 | 1 |
| Brillance | 2 | 2 | 3 | 2 | 2 | 2 | 2 | 2 |
| **Optiques** | **4** | **5** | **5** | **5** | **6** | **5** | **5** | **5** |
| Rugosité | 1 | 1 | 2 | 2 | 1 | 3 | 2 | 1 |
| Porosité | 1 | 1 | 1 | 1 | 1 | 1 | 1 | 1 |
| Rigidité SM | 1 | 1 | 1 | 1 | 1 | 1 | 1 | 1 |
| Rupture SM | 1 | 1 | 1 | 2 | 1 | 2 | 2 | 2 |
| IGT sec | 1 | 1 | 3 | 3 | 3 | 3 | 3 | 3 |
| **physiques** | **5** | **5** | **8** | **9** | **7** | **10** | **9** | **8** |
| Cobb 60 | 1 | 2 | 2 | 2 | 2 | 2 | 2 | 2 |
| Energies | 2 | 3 | 3 | 3 | 3 | 3 | 3 | 3 |
| **mouillabilité** | **3** | **5** | **5** | **5** | **5** | **5** | **5** | **5** |
| **Rétention d'eau** | **1** | **1** | **1** | **0** | **1** | **0** | **1** | **2** |
| **TOTAL** | **13** | **16** | **19** | **19** | **19** | **20** | **20** | **20** |

Bien que subjective, cette notation permettait de dégager une tendance qui éliminait les produits référencés FPO3 et DM2 et montrait que la dextrine de pois DP1 selon l'invention amenait au papier des qualités voisines de celles apportées par certaines des dextrines de maïs auxquelles elle était confrontée. Au-delà, les propriétés rhéologiques des colles et des sauces lui procuraient un avantage certain.

**Revendications**

1. Utilisation, pour la préparation d'une composition de couchage d'un papier ou d'un carton plat, présentant une matière sèche supérieure à 25%, d'une dextrine d'amidon de légumineuses, c'est-à-dire d'un amidon modifié en phase sèche, par action de la chaleur, d'une combinaison de la chaleur et d'un réactif chimique ou par action de rayonnements ionisants, **caractérisé en ce qu'**elle présente :

   - un poids moléculaire, déterminé par tamisage moléculaire avec détection par diffusion de la lumière, au plus égal à $0,40.10^6$, et au moins égal à $0,04.10^6$,
   - une température de transformation sol/gel inférieure à 20°C, laquelle est déterminée comme suit : différentes solutions colloïdales font l'objet d'appréciations rhéologiques durant une étape de refroidissement, selon les principes de détermination de viscosités complexes, ces mesures étant effectuées à l'aide d'un rhéomètre dynamique AR2000, distribué par TA Instrument, en utilisant des cylindres coaxiaux 14/15mm, la rampe de refroidissement linéaire étant comprise entre 80 et 5°C, à raison de 1 °C/minute, la contrainte de sollicitation colloïdale variant en fonction de la réponse de l'échantillon testé, la fréquence étant fixée à 1 Hertz,
   - une teneur en amylose inférieure à 60%,
   - un taux de branchement, déterminé par analyse RMN du proton, supérieur à 4%.

**2.** Utilisation selon la revendication 1, **caractérisée en ce que** ladite composition de couchage présente une matière sèche supérieure à 30%.

**3.** Utilisation selon l'une des revendications 1 ou 2, **caractérisée en ce que** ladite composition de couchage consiste en une composition de top-couchage ou couchage externe.

**4.** Utilisation selon l'une quelconque des revendications 1 à 3, **caractérisée en ce que** ladite composition de couchage présente une matière sèche comprise entre 50 et 72%.

**5.** Utilisation selon l'une quelconque des revendications 1 à 4, **caractérisée en ce que** la dextrine d'amidon de légumineuses présente un poids moléculaire au moins égal à $0,11. 10^6$.

**6.** Utilisation selon l'une des revendications 1 à 5, **caractérisée en ce que** la dextrine d'amidon présente une température de transformation sol/gel inférieure à 10°C.

**7.** Utilisation selon l'une des revendications 1 à 6, **caractérisée en ce que** la dextrine d'amidon présente un taux de branchement, déterminé par analyse RMN du proton, d'au plus 12%.

**8.** Utilisation selon l'une des revendications 1 à 7, **caractérisée en ce que** la dextrine d'amidon de légumineuses présente une teneur en amylose comprise entre 25 et 55%.

**9.** Composition de couchage du papier ou du carton plat, **caractérisée en ce qu'**elle :

- présente une matière sèche supérieure à 25%,
- contient au moins une dextrine d'amidon de légumineuses, c'est-à-dire d'un amidon modifié en phase sèche, par action de la chaleur, d'une combinaison de la chaleur et d'un réactif chimique ou par action de rayonnements ionisants, présentant :

- un poids moléculaire, déterminé par tamisage moléculaire avec détection par diffusion de la lumière, au plus égal à $0,40.10^6$, et au moins égal à $0,04.10^6$, et
- une température de transformation sol/gel inférieure à 20°C, laquelle est déterminée comme suit : différentes solutions colloïdales font l'objet d'appréciations rhéologiques durant une étape de refroidissement, selon les principes de détermination de viscosités complexes, ces mesures étant effectuées à l'aide d'un rhéomètre dynamique AR2000, distribué par TA Instrument, en utilisant des cylindres coaxiaux 14/15mm, la rampe de refroidissement linéaire étant comprise entre 80 et 5°C, à raison de 1°C/minute, la contrainte de sollicitation colloïdale variant en fonction de la réponse de l'échantillon testé, la fréquence étant fixée à 1 Hertz,
- une teneur en amylose inférieure à 60%, un taux de branchement, déterminé par analyse RMN du proton, supérieur à 4%.

**10.** Composition selon la revendication 9, **caractérisée en ce que** la dextrine d'amidon de légumineuses, qu'elle contient, présente un taux de branchement, déterminé par analyse RMN du proton, d'au plus 12%.

**11.** Utilisation d'une composition selon l'une des revendications 9 ou 10, pour le couchage du papier ou du carton plat.

**12.** Dextrine d'amidon de légumineuses, qui est un amidon modifié en phase sèche, par action de la chaleur, d'une combinaison de la chaleur et d'un réactif chimique ou par action de rayonnements ionisants, **caractérisée en ce qu'**elle présente :

- une teneur en amylose inférieure à 60%,
- un poids moléculaire, déterminé par tamisage moléculaire avec détection par diffusion de la lumière, au plus égal à $0,40.10^6$, et au moins égal à $0,04.10^6$, et
- une température de transformation sol/gel inférieure à 20°C, laquelle est déterminée comme suit : différentes solutions colloïdales font l'objet d'appréciations rhéologiques durant une étape de refroidissement, selon les principes de détermination de viscosités complexes, ces mesures étant effectuées à l'aide d'un rhéomètre dynamique AR2000, distribué par TA Instrument, en utilisant des cylindres coaxiaux 14/15mm, la rampe de refroidissement linéaire étant comprise entre 80 et 5°C, à raison de 1 °C/minute, la contrainte de sollicitation colloïdale variant en fonction de la réponse de l'échantillon testé, la fréquence étant fixée à 1 Hertz,

- un taux de branchement, déterminé par analyse RMN du proton, supérieur à 4%.

**13.** Dextrine d'amidon de légumineuses selon la revendication 12, **caractérisée en ce qu'**elle présente :

- une teneur en amylose comprise entre 25 et 55%,
- un poids moléculaire au moins égal à $0{,}11{.}10^6$, et
- une température de transformation sol/gel inférieure à 10°C.

**14.** Dextrine d'amidon de légumineuses selon la revendication 13, **caractérisée en ce qu'**elle présente un taux de branchement, déterminé par analyse RMN du proton, au plus égal à 12%.


**Patentansprüche**

**1.** Verwendung zur Herstellung einer Beschichtungszusammensetzung für Papier oder flachen Karton, aufweisend eine Trockenmasse oberhalb von 25 %, ein Dextrin aus Leguminosenstärke, d.h. eine Stärke, die in der Trockenphase modifiziert wurde, durch die Wirkung von Hitze, einer Kombination von Hitze und einem chemischen Reagenz, oder durch die Wirkung von ionisierenden Strahlen, **dadurch gekennzeichnet, dass** es aufweist:

- ein Molekulargewicht, bestimmt mit einem Molekularsieb durch Detektion von Lichtstreuung, von höchstens $0{,}40{.}10^6$ und mindestens $0{,}04{.}10^6$,
- eine Sol/Gel-Transformationstemperatur unterhalb von 20 °C, welche wie folgt bestimmt wird: unterschiedliche kolloidale Lösungen werden in einer rheologischen Bestimmung während eines Abkühlungsschrittes untersucht, gemäß den Prinzipien zur Bestimmung von komplexen Viskositäten, wobei die Messungen mithilfe eines dynamischen Rheometers AR2000, vertrieben durch TA Instrument, durchgeführt werden, wobei Coaxialzylinder 14/15 mm verwendet werden, wobei die lineare Abkühlung zwischen 80 und 5°C umfasst ist, bei 1 °C/Minute, wobei der kolloidale Zustand sich abhängig von der Antwort der getesteten Probe verändert, wobei die Frequenz auf ein 1 Hertz bestimmt ist,
- einen Amylosegehalt unterhalb von 60 %,
- einen Verzweigungsgrad oberhalb von 4 %, bestimmt durch Protonen-MNR.

**2.** Verwendung nach Anspruch 1, **dadurch gekennzeichnet, dass** die Beschichtungszusammensetzung eine Trockenmasse oberhalb von 30 % aufweist.

**3.** Verwendung nach einem der Ansprüche 1 oder 2, **dadurch gekennzeichnet, dass** die Beschichtungszusammensetzung aus einer Deckbeschichtungs- oder äußeren Beschichtungszusammensetzung besteht.

**4.** Verwendung nach einem der Ansprüche 1 bis 3, **dadurch gekennzeichnet, dass** die Beschichtungszusammensetzung eine Trockenmasse umfasst zwischen 50 und 72 % aufweist.

**5.** Verwendung nach einem der Ansprüche 1 bis 4, **dadurch gekennzeichnet, dass** das Dextrin aus Leguminosenstärke ein Molekulargewicht von wenigstens $0{,}11{.}10^6$ aufweist.

**6.** Verwendung nach einem der Ansprüche 1 bis 5, **dadurch gekennzeichnet, dass** das Stärkedextrin eine Sol/Gel-Transformationstemperatur unterhalb von 10°C aufweist.

**7.** Verwendung nacheinem der Ansprüche 1 bis 6, **dadurch gekennzeichnet, dass** das Stärkedextrin einen Verzweigungsgrad von höchstens 12 % aufweist, bestimmt durch Analyse mit Protonen-NMR.

**8.** Verwendung nach einem der Ansprüche 1 bis 7, **dadurch gekennzeichnet, dass** das Dextrin aus Leguminosenstärke einen Amylosegehalt umfasst zwischen 25 und 55 % aufweist.

**9.** Beschichtungszusammensetzung für Papier oder flachen Karton, **dadurch gekennzeichnet, dass**

- sie eine Trockenmasse oberhalb von 25 % aufweist,
- wenigstens ein Dextrin aus Leguminosenstärke enthält, d.h. eine Stärke, die in der Trockenphase modifiziert wurde, durch die Wirkung von Hitze, einer Kombination von Hitze und einem chemischen Reagenz, oder durch die Wirkung von ionisierenden Strahlen, welches aufweist:

- ein Molekulargewicht, bestimmt mit einem Molekularsieb durch Detektion von Lichtstreuung, von höchstens $0,40 \cdot 10^6$ und mindestens $0,04.10^6$, und

- eine Sol/Gel-Transformationstemperatur unterhalb von 20°C, welche wie folgt bestimmt wird: unterschiedliche kolloidale Lösungen werden in einer rheologischen Bestimmung während eines Abkühlungsschrittes untersucht, gemäß den Prinzipien zur Bestimmung von komplexen Viskositäten, wobei die Messungen mithilfe eines dynamischen Rheometers AR2000, vertrieben durch TA Instrument, durchgeführt werden, wobei Coaxialzylinder 14/15 mm verwendet werden, wobei die lineare Abkühlung zwischen 80 und 5 °C umfasst ist, bei 1 °C/Minute, wobei der kolloidale Zustand sich abhängig von der Antwort der getesteten Probe verändert, wobei die Frequenz auf ein 1 Hertz bestimmt ist,

- einen Amylosegehalt unterhalb von 60 %, einen Verzweigungsgrad oberhalb von 4 %, bestimmt durch Protonen-MNR.

**10.** Zusammensetzung nach Anspruch 9, **dadurch gekennzeichnet, dass** das Dextrin aus Leguminosenstärke, welches es enthält, einen Verzweigungsgrad von höchstens 12 % aufweist, bestimmt durch Analyse mit Protonen-NMR.

**11.** Verwendung einer Zusammensetzung nach einem der Ansprüche 9 oder 10, zur Beschichtung von Papier oder flachem Karton.

**12.** Dextrin aus Leguminosenstärke, welche eine Stärke ist, die in der Trockenphase modifiziert ist, durch die Wirkung von Hitze, einer Kombination von Hitze und einem chemischen Reagenz, oder durch die Wirkung von ionisierenden Strahlen, **dadurch gekennzeichnet, dass** es aufweist:

- einen Amylosegehalt unterhalb von 60 %,
- ein Molekulargewicht, bestimmt mit einem Molekularsieb durch Detektion von Lichtstreuung, von höchstens $0,40.10^6$ und mindestens $0,04.10^6$, und
- eine Sol/Gel-Transformationstemperatur unterhalb von 20 °C, welche wie folgt bestimmt wird: unterschiedliche kolloidale Lösungen werden in einer rheologischen Bestimmung während eines Abkühlungsschrittes untersucht, gemäß den Prinzipien zur Bestimmung von komplexen Viskositäten, wobei die Messungen mithilfe eines dynamischen Rheometers AR2000, vertrieben durch TA Instrument, durchgeführt werden, wobei Coaxialzylinder 14/15 mm verwendet werden, wobei die lineare Abkühlung zwischen 80 und 5°C umfasst ist, bei 1 °C/Minute, wobei der kolloidale Zustand sich abhängig von der Antwort der getesteten Probe verändert, wobei die Frequenz auf ein 1 Hertz bestimmt ist,
- einen Verzweigungsgrad oberhalb von 4 %, bestimmt durch Protonen-MNR.

**13.** Dextrin aus Leguminosenstärke nach Anspruch 12, **dadurch gekennzeichnet, dass** es aufweist:

- einen Amyloseghalt, umfasst zwischen 25 und 55 %.
- ein Molekulargewicht von wenigstens $0,11.10^6$ und
- eine Sol/Gel-Transformationstemperatur unterhalb von 10 °C.

**14.** Dextrin aus Leguminosenstärke nach Anspruch 13, **dadurch gekennzeichnet, dass** das Leguminosenstärkedextrin, welches es enthält, einen Verzweigungsgrad von höchstens 12 % aufweist, bestimmt durch Analyse mit Protonen-NMR.

**Claims**

**1.** Use, for the preparation of a paper or folding carton coating composition, having a dry matter content greater than 25%, a leguminous starch dextrin, which means a starch modified in dry phase by the action of heat, a combination of heat and a chemical reagent or by the action of ionizing radiation, **characterized in that** it has:

- a molecular weight, determined by molecular sieving with light diffusion detection, at most equal to $0,40.10^6$, and at least equal to $0,04.10^6$,
- a sol/gel conversion temperature of less than 20°C, determined as follow: different colloidal solutions are the subject of rheological assessments during cooling stage, according to principles for the determination of complex viscosities, these measurements are carried out using an AR2000 dynamic rheometer, distributed by TA Instrument, using 14/15 mm coaxial cylinders, a linear cooling gradient comprised between 80 and 5°C, at a rate of 1°C/minute, the colloidal stress constraint varies as a function of the response of the simple tested, the frequency being fixed at 1 Hertz,
- an amylose content of less than 60 %,
- has a degree of branching, determined by NMR analysis, of greater than 4 %.

2. Use according to claim 1, **characterized in that** said coating composition has a dry matter content of greater than 30 %.

3. Use according to any one of claims 1 or 2, **characterized in that** said coating composition consists of a top-coating or external composition.

4. Use according to any one of claims 1 to 3, **characterized in that** said coating composition has a dry matter content comprised between 50 % and 72 %.

5. Use according to any one of claims 1 to 4, **characterized in that** the leguminous starch dextrin has a molecular weight at least equal to $0,11.10^6$.

6. Use according to any one of claims 1 to 5, **characterized in that** the starch dextrin has a sol/gel conversion temperature of less than 10°C.

7. Use according to any one of claims 1 to 6, **characterized in that** the starch dextrin has a degree of branching, determined by NMR analysis, of at most equal to 12 %.

8. Use according to any one of claims 1 to 7, **characterized in that** the leguminous starch dextrin has an amylose content comprised between 25 % and 55 %.

9. Coating composition for paper or folding carton, **characterized in that** it:

- has a dry matter content greater than 25 %,
- contains at least one leguminous starch dextrin, which means a starch modified in dry phase by the action of heat, a combination of heat and a chemical reagent or by the action of ionizing radiation, having:

- a molecular weight, determined by molecular sieving with light diffusion detection, at the most equal to $0,40.10^6$, and at least equal to $0,04.10^6$ and,
- a sol/gel conversion temperature of less than 20°C, determined as follow: different colloidal solutions are the subject of rheological assessments during cooling stage, according to principles for the determination of complex viscosities, these measurements are carried out using an AR2000 dynamic rheometer, distributed by TA Instrument, using 14/15 mm coaxial cylinders, a linear cooling gradient comprised between 80 and 5°C, at a rate of 1°C/minute, the colloidal stress constraint varies as a function of the response of the simple tested, the frequency being fixed at 1 Hertz,
- an amylose content of less than 60 %,
- has a degree of branching, determined by NMR analysis, greater than 4 %.

10. Composition according to claim 9, **characterized in that** the leguminous starch derivative that it contains, has a degree of branching, determined by NMR analysis, of at the most 12 %.

11. Use of a composition according to one of claims 9 or 10, for coating paper or folding carton.

12. Leguminous starch derivative, which is a starch modified in dry phase by the action of heat, a combination of heat and a chemical reagent or by the action of ionizing radiation, **characterized in that** it has:

- an amylose content of less than 60 %,
- a molecular weight, determined by molecular sieving with light diffusion detection, at the most equal to $0,40.10^6$, and at least equal to $0,04.10^6$ and,
- a sol/gel conversion temperature of less than 20°C, determined as follow: different colloidal solutions are the subject of rheological assessments during cooling stage, according to principles for the determination of complex viscosities, these measurements are carried out using an AR2000 dynamic rheometer, distributed by TA Instrument, using 14/15 mm coaxial cylinders, a linear cooling gradient comprised between 80 and 5°C, at a rate of 1°C/minute, the colloidal stress constraint varies as a function of the response of the simple tested, the frequency being fixed at 1 Hertz,
- a degree of branching, determined by NMR analysis, greater than 4 %.

**13.** Leguminous starch derivative according to claim 12, **characterized in that** it has:

- an amylose content comprised between 25 % and 55 %,
- a molecular weight at least equal to $0,11.10^6$, and
- a sol/gel conversion temperature of less than 10°C.

**14.** Leguminous starch derivative according to claim 13, **characterized in that** it has a degree of branching, determined by NMR analysis, at most equal to 12 %.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1296790 A
- US 20050008801 A
- EP 0945487 A
- US 6512108 B
- EP 1281721 A
- WO 2005003456 A
- WO 04076163 A
- WO 9218325 A
- US 20010026827 A
- WO 0041576 A
- US 5512311 A
- WO 0160867 A
- US 6423775 B
- FR 2309638
- WO 9916810 A
- WO 0058388 A
- WO 0056804 A

**Littérature non-brevet citée dans la description**

- **J.A.RADLEY.** Industrial Uses of Starch and its Derivatives. Applied Science Publishers Ltd, 1976, 207
- **WHISTLER ; BEMILLER ; PASCHALL.** Starch : Chemistry and Technology - Second Edition : Industrial Aspects. Academic Press, 1984, 558-565
- Characterisation of Phosphorus in Starch by P-Nuclear Magnetic Resonance Spectroscopy. *Cereal Chemistry,* 1994, vol. 71 (5), 488-493
- Quantitative Measurement of Total Starch in Cereal Flours and Products. *Journal of Cereal Science,* 1994, vol. 20, 51-58
- Studies on the Structure of Pea Starch. *Starch/Stärke,* 1993, 45